# EUROPÄISCHE PATENTSCHRIFT

(11) **EP 2 918 643 B1**
(45) Veröffentlichungstag und Bekanntmachung des Hinweises auf die Patenterteilung: **22.11.2017**
(21) Anmeldenummer: 15157286.4
(22) Anmeldetag: 03.03.2015
(51) Int. Cl.: C09D 1/00, C09D 5/00

(54) **Additiv zur Reduzierung des Wachstums von Mikroorganismen auf Farb- und Putzzusammensetzungen**
Additive for reducing the growth of microorganisms on paint and plaster compounds
Additif destiné à réduire la croissance de micro-organismes dans des compositions de couleur et d'enduit

(30) Priorität: 10.03.2014 DE 102014204349
(43) Veröffentlichungstag der Anmeldung: 16.09.2015
(73) Patentinhaber: CHT R. BEITLICH GmbH, 72072 Tübingen (DE)
(72) Erfinder: Jaich, Tanja, 72127 Kusterdingen (DE); Nitsche, Nadja, 72770 Reutlingen (DE); Vöhringer, Inga-Lisa, 72555 Metzingen (DE); Lutz, Harald, 72124 Pliezhausen (DE); Schaller, Andre, 70567 Stuttgart (DE)
(74) Vertreter: dompatent von Kreisler Selting Werner - Partnerschaft von Patent- und Rechtsanwälten mbB

(56) Entgegenhaltungen:
- WO-A1-2004/003070
- DE-A1- 3 831 899
- FR-A1- 2 775 696

## Beschreibung

Die vorliegende Erfindung beschreibt eine Farb- oder Putzzusammensetzung in hellen Farbtönen, die eine erhöhten Anteil an Infrarot-(IR)-Strahlung aus der Umgebung aufnehmen, sie in Wärme umwandeln kann und somit zu einer schnelleren Abtrocknung, nach Beregnung oder Bildung von Kondenswasser, der Farbe oder des Putzes führen. Dieser Effekt führt wiederum zu einem geringeren Wachstum von Algen.

Auf Oberflächen aufgebrachte IR-Absorber zur Blockierung von Sonnenstrahlung sind dem Fachmann seit langem bekannt. So beschreibt EP 0795565 A mikrokristalline in einen Binder eingebrachte leitfähige Oxide (anorganische Partikel). Ebenso sind in EP 0943587 A derartige Partikel gemeinsam mit Boridpartikeln offenbart, wodurch eine verbesserte Leitfähigkeit der Oberfläche erzielt wird. Aus EP 1373415 A sind derartige Partikel in Nadelform bekannt, die in einer photopolymerisierbaren Zubereitung angewendet werden. Ebenfalls bekannt ist die schnellere Trocknung/Härtung von Druckfarben und Lackschichten, die partikuläre Halbleitermaterialen enthalten, beschrieben in EP 1 517 950 B1.

DE 195 01 114 A1 beschreibt einen Anstrichstoff mit reflektierenden Eigenschaften in zwei Wellenlängenbereichen und absorbierenden Eigenschaften in einem dritten Wellenlängenbereich, der auch bei sicht optisch heller Einfärbung Energie aus dem nahen Infrarotbereich des solaren Spektrums gewinnen kann, ohne sie im Bereich der Wärmestrahlung in üblicher Weise wieder abzugeben.

DE 38 31 899 A1 beschreibt Massen zur nachträglichen Aufbringung von Beschichtungen auf Flächen zur Abschirmung gegen Erdstrahlen mit Lacken oder Pasten und mit darin enthaltenem Halbleitermaterial zum Anstreichen oder Spritzen von Flächen, wie Wänden und Decken von Räumen in Bauwerken.

DE 10 2005 038 774 A1 betrifft Polymere, die sich dadurch auszeichnen, dass sie eine hohe Absorption im nahen IR-Bereich aufweisen, und deren Verwendung, insbesondere in der Termoformung und beim IR-Lichtschweißen.

DE 10 2013 100 662 A1 schlägt eine Markierungszusammensetzung vor, mit welcher ein besserer Schutz von Waren als bisher verfügbar unabhängig von deren Farbgebung erreicht werden soll. Die Markierungszusammensetzung umfasst eine Infrarot absorbieren partikuläre Komponente sowie ein Kohlenstoffderivat, wobei das Gewichts Verhältnis von Infrarot absorbierender Komponente zu Kohlenstoffderivat im Bereich von etwa 100:1 bis etwa 10.000: 1 liegt.

FR 2 775 696 beschreibt ein photokatalytisches Substrat insbesondere auf der Basis von Titandioxid.

Das Problem des Schimmel- und Algenbefalls wird in keiner dieser Schriften benannt. Der Fachmann hat dieses Problem in der Vergangenheit durch den Einsatz von Bioziden gelöst. Dieses Verfahren hat den Nachteil, dass sich diese eingesetzten Substanzen nicht dauerhaft an den beschichteten Oberflächen verankern lassen und durch Regen und Bewitterung ausgewaschen werden. Dadurch verlieren sie nicht nur ihre Wirkung am gewünschten Ort, sondern belasten die Umwelt an anderer Stelle.

Dem Fachmann ist bekannt, dass dunkle Farb- oder Putzbeschichtungen mit geringem Hellbezugswert deutlich weniger unter Algen- und Schimmelbefall leiden als helle Putze. Dies ist einleuchtend, da dunkle Beschichtungen mehr solare Strahlung, insbesondere im IR-Bereich, absorbieren und somit zu einer schnelleren Verdunstung von anhaftenden Wassertropfen bzw. eines anhaftenden Wasserfilms aufgrund der höheren Temperatur der Oberfläche führen. Dadurch wird dem biologischen Bewuchs der notwendige Lebensraum entzogen. Helle Farbtöne im Sinne der vorliegenden Erfindung werden daher in Bezug auf dunkle Farben dadurch definiert, dass die L*-Werte >20, bevorzugt >50 sind. Der L*a*b*-Farbraum ist ein Farbraum, der den Bereich der wahrnehmbaren Farben abdeckt. Der Farbraum ist auf Grundlage der Gegenfarbentheorie konstruiert. Eine der wichtigsten Eigenschaften des L*a*b*-Farbmodells ist seine Geräteunabhängigkeit, das heißt, die Farben werden unabhängig von der Art ihrer Erzeugung und Wiedergabetechnik so definiert, wie sie sich präsentieren. Zeigen Wiedergabemedien und -geräte farbverfälscht an, wird diese Verfälschung erfasst, nicht der zu Grunde liegende rechnerische Wert. Das Farbmodell ist in der EN ISO 11664-4 genormt.

In diesem Farbmodell sollen gleiche euklidischen Abstände empfindungsgemäß gleichen Farbabständen entsprechen, was näherungsweise auch gelingt. Dies wurde durch eine logarithmische Umformung der xy-Farbart-Ebene des CIE-XYZ-Modells erreicht.

Der so standardisierte Farbraum ist gleichabständig und geräteunabhängig. Jede wahrnehmbare Farbe im Farbraum ist durch den Farbort mit den Koordinaten {L*, a*, b*} definiert. In Anwendung der Gegenfarbentheorie liegen sich hier Grün und Rot auf der a*-Achse gegenüber. Die b*-Achse entspricht den Gegenfarben Blau und Gelb.

Die L*-Achse steht auf dieser Ebene senkrecht und gibt die Helligkeit wieder. Die L*-Achse kann auch als Neutralgrauachse bezeichnet werden, da sie die Endpunkte Schwarz (L=0) und Weiß (L=100) besitzt und die Zwischenwerte auf dieser Achse die unbunten Grautöne sind.

Aufgabe der Erfindung war es daher eine Putz- und / oder Farbzubereitung für helle Farben bereitzustellen, die eine effiziente Absorption des IR-Bereichs der Sonnenstrahlung als umweltfreundliche und ubiquitäre Energiequelle gewährleistet und so den Einsatz von umweltbelastenden Bioziden (Fungizide, Algizide) überflüssig macht.

Des Weiteren kann bei Wänden, die nicht oder nur unzureichend gedämmt sind durch die höhere Oberflächentemperatur der Fassade die Wärmedämmung erhöht und somit Heizkosten eingespart werden.

Überraschenderweise wurde gefunden, dass spezielle Halbleiter wie in Anspruch 1 definiert, leitfähige organische Polymere, transparente leitfähige Oxide oder deren Mischungen auf mineralischen Oberflächen, insbesondere auf Wänden, Beton, Armierungsmassen, Putzen oder Ziegeln aufgebracht, die Trockengeschwindigkeit nach Feuchtigkeitsbelastung dieser Materialien signifikant erhöhen. Dadurch kommt es zu einer schnelleren Abtrocknung von Regenwasser oder Kondenswasser. Dadurch kann mikrobieller Befall, wie Algenwachstum auf der Beschichtungsoberfläche deutlich vermindert werden. Besonders überraschend wurde gefunden, dass keine Veränderung der farblichen Gegebenheiten einer damit veredelten Oberfläche verursacht wird.

Besonders bevorzugt werden die erfindungsgemäßen Halbleiter, leitfähigen organischen Polymere, transparenten leitfähigen Oxide oder deren Mischungen in Form von Farben, Lasuren oder Putz auf mineralischen Oberflächen wie Beton, Luftporenbeton, Ziegel, Naturstein oder Armierungsbeschichtungen von Wärmedämmverbund (WDV)-Systemen aufgebracht. Im Einzelnen sind dies:
- Kunststoffgebunde Farbsysteme wie Dispersionsfarbsysteme, auf Basis von Polyurethan, Kunstharz, Silikonharz oder Silikat. Ebenso Kunststoffgebunde Putzsysteme auf Basis von Kunstharz, Silikonharz oder Silikat,
- (wesentliche) Bestandteile der Farb- und Putzsysteme, wie Verdicker (Polyurethane, Acrylate oder Celluloseether), rheologische Additive, Entschäumer und Bindemittel (Styrolacrylat, Reinacrylat oder Polyvinylacrylat, Naturharz oder Wasserglas), spezielle anorganische Bindemittel,
- Imprägnierungen aus Silikon- oder kunstharzgebundenen Systemen.

Die Herstellung der Farb- oder Putzsysteme erfolgt an Hand einer beispielhaften Richtrezeptur mit einem hochtourigen Dissolver, einer Perlmühle oder einer Rührwerkskugelmühle.

Die Einarbeitung der Halbleiter, leitfähigen organischen Polymere, und/ oder transparenten leitfähigen Oxide erfolgt als Dispersion oder pulverförmig mit Hilfe eines Dissolvers, einer Perlmühle oder einer Rührwerkskugelmühle. Die aktiven Substanzen können während der Herstellung des Farb- oder Putzsystem oder in das fertige Produkt eingerührt werden.

Die wesentlichen Vorteile der vorliegenden Beschichtungen bestehen in einer sehr schnellen Abttrocknung der mineralischen Oberflächen. Es tritt keine Farbverschiebung durch die Anwendung der Beschichtungen auf. Mit Hilfe der erfindungsgemäßen Beschichtungen werden höhere Oberflächentemperaturen erreicht, die für die schnelle ab Trocknung verantwortlich sind.

Die Applikation kann durch Bürsten, Streichen, Sprayen, Spachteln, Aufziehen oder Rollen erfolgen. Es kann auch in Form von Slurrys, Dispersionen, Pasten oder Pulvern eingesetzt und in die Putz- oder Farbzubereitungen eingearbeitet werden.

Erfindungsgemäß ist die Anwendung von Halbleitern wie beispielsweise A^{III}B^{V}-Halbleiter. Der A^{III}B^{V}-Halbleiter-Typ im Sinne dieser Erfindung umfasst, die Verbindungen AB der Elemente A, wobei A für Aluminium, Gallium, Indium, Thallium, Germanium, Zinn, Blei und B für Stickstoff, Phosphor, Arsen, Antimon und Bismut in beliebigen stöchiometrischen Verhältnissen enthalten. Besonders bevorzugt sind im Sinne der Erfindung die binären Pentelverbindungen des Aluminiums, insbesondere Aluminiumnitrid, da sie sich im Allgemeinen durch hohe chemische Inertheit auszeichnen.

Im Sinne der vorliegenden Erfindung können organische leitfähige Polymere wie Polypyrrol, Polyanilin, Polyparaphenylen, Polythiophen, Poly(4,4-dioctylcyclopentadithiophene), Poly(3,4-ethylendioxythiophen) oder Poly(3,4-ethylendioxythiophen) / Poly(styrolsulfonat) als Halbleiter eingesetzt werden.

Geeignete transparente leitfähige Oxide der Typen AₙBₘOₓ, wobei A Fluor, Indium, Magnesium, Aluminium, Chrom, Zink oder Antimon sein kann und B Zink, Titan oder Zinn, und n eine Zahl zwischen 0 und 1 und m=1-n ist, wobei x die erforderlich Zahl zur stöchiometrischen Absättigung der Metalle einnimmt. Diese Gruppe umfasst zum Beispiel fluordotiertes Zinnoxid, Indiumzinnoxid, Aluminiumzinkoxid, Magnesiumzinkoxid und, Chromtitanoxid.

Weiterhin können bestimmte, Infrarotstrahlung absorbierende Farbstoffe gegebenenfalls in geringen Mengen zusätzlich enthalten sein, um den Effekt der Wärmeaufnahme zu erhöhen. Generell sind Infrarotstrahlung absorbierende Materialien im Sinne der Erfindung solche Materialien, die in einem Wellenlängenbereich von 700 bis 35.000 nm, besonders bevorzugt 700-3000 nm absorbieren. Als IR-Absorber wird insbesondere ein Material eingesetzt, das ausgewählt ist aus der Gruppe Phthalocyanine, Naphthalocyanine, Anthrachinone, Cyaninverbindungen, Squalyliumverbindungen, Thiolnickel-Komplexverbindungen, Triallylmethane, Naphthochinone, Anthrachinone und Aminverbindungen wie N,N,N',N'-Tetrakis(p-di-n-butylaminophenyl)-p-phenylenediaminium perchlorat, Phenylenediaminium chlorat, Phenylenediaminium hexafluoroantimonat, Phenylenediaminium fluoroborat, Phenylenediaminium fluorat und Phenylenediaminium perchlorat.

Als mineralische Oberflächen sind im Sinne der Erfindung Wände, Ziegel, aber auch Putze oder die auf den vorgenannten Materialien aufgebrachten Beschichtungen, wie kunstharzgebundene und Silikat-Putzsysteme oder mineralische Beschichtungen zu verstehen.

Durch die Anwendung der erfindungsgemäßen Putz- oder Farbzubereitung erwärmt sich eine damit veredelte mineralische Oberfläche unter Einfluss von Sonnenlicht oder IR-Strahlung signifikant mehr als ein entsprechendes Vergleichsmuster gleicher Parameter (z.B. Materialzusammensetzung, Porosität, Beschichtung). Zugleich lässt sich dadurch eine Verringerung der Remission elektromagnetischer Strahlung und / oder eine Erhöhung der Absorption feststellen. Durch die erfindungsgemäße Beschichtung wird zudem das Abtrocknungsverhalten nach Beregnung des Beschichtungsmaterials selbst und des Trocknungsverhaltens eines darunterliegenden Materials beschleunigt.

Schnelltrocknend im Sinne der vorliegenden Erfindung wird definiert, als prozentuale Beschleunigung des Trocknungsverhaltens nach, der unter "Bestimmung der Trocknungsgeschwindigkeit" beschriebenen Messmethode, von mindestens > 5 %, bevorzugt > 10 %, besonders bevorzugt > 25 % im Vergleich zu einer Referenzprobe.

### Untersuchungsmethoden:

### Bestimmung der Trocknungsgeschwindigkeit

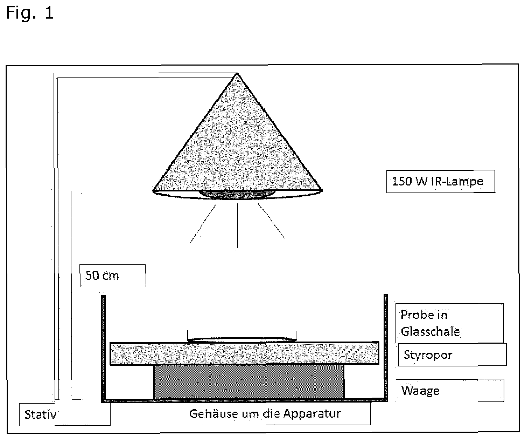

Mit dem in Fig. 1 gezeigten Messaufbau wird die Trocknungsgeschwindigkeit der verschiedenen erfindungsgemäßen Putzsysteme bestimmt. Dabei variiert die IR-aktiven Substanz.

Die 7x7 cm große Probe wird gewogen und für ein Minute in destilliertem Wasser gelagert. Anschließend wird die Probe mit der Pinzette herausgeholt und 10 Sekunden abgetropft. Um die überschüssige Flüssigkeit zu entfernen, wird die Probe für eine Minute auf ein trockenes Tuch gelegt.
Die von der Probe aufgenommene Wassermenge wird mittels der Waage bestimmt. Die Proben werden mit einer handelsüblichen 150 W Infrarotlampe in einem Abstand von 50 cm bestrahlt. Nun wird über einen Zeitraum von 60 Minuten kontinuierlich die Verdunstung gemessen. Die Auswertung erfolgt bei einer Abtrocknung von 50%. Die Reporduzierbarkeit liegt bei ±1,5%.

### Bestimmung der Oberflächentemperatur

In diesem Ausführungsbeispiel wird die Oberflächentemperatur eines trockenen und eines nassen erfindungsgemäßen Farb- und Putzsystems untersucht. Für diese Untersuchung werden handelsübliche Eternitplatten (Faserzement) mit dem zu prüfendem erfindungsgemäßen Farb- und Putzsystem (mit IR-aktiver Substanz modifiziert und nicht modifiziert) beschichtet und eine Woche in einem Klimaraum bei 23°C und einer relativen Luftfeuchte von 50% konditioniert. Anschließend werden die Proben 10 Minuten mit der IR-Lampe, im Abstand von 18 cm direkt bestrahlt. Mittels Wärmebildkamera wird das Temperaturprofil des Putzsystems erfasst. Bevorzugt wir ein delta T von > 10 °C, besonders bevorzugt ein delta T > 15°C.

### Messung des Farbabstandes

Der Vergleich des Farbabstandes der erfindungsgemäßen Farb- oder Putzzusammensetzungen erfolgt gegenüber einem nicht modifizierten System. Delta E wird als Maß für den empfundenen Farbabstand herangezogen. Ziel ist es einen Delta E Wert kleiner 4, besonders kleiner 2 und ganz besonders kleiner 1 zu erreichen.

| Delta E | Bewertung |
|---|---|
| 0,0-0,5 | kein bis fast kein Unterschied |
| 0,5-1,0 | Farbunterschied kann für das geübte Auge bemerkbar |
| 1,0-2,0 | merklicher Farbunterschied |
| 2,0-4,0 | wahrgenommener Farbunterschied |
| 4,0-5,0 | wesentlicher Farbunterschied, der selten toleriert wird |
| > 5,0 | die Differenz wird als andere Farbe bewertet |

### Untersuchung des Algenbefalls beschleunigten Bewitterung mit Algenimpfung

Vergleich der des Algenbefall bzw. des Wachstums von Grünalgen bei einer beschleunigten Bewitterung mit Algenimpfung.

Die Untersuchung der algistatischen Wirkung erfolgt auf jeweils unbehandelten Beschichtungsmustern. Die Inkubation wird beispielsweise nach der Inhouse-Methode unter Verwendung des Stammes ROS 55/3Stichococcus sp. der Stammsammlung der Universität Rostock durchgeführt.

Die Testkeime werden jeweils auf agar-freie Nährmedien übertragen, damit durch die Medien keine Verfälschung z.B. durch Film- oder Gelbildung eintritt. Es ist jeweils genügen Futter da, aber nicht als typischer Nährboden, sondern in wässriger Form wie auch an der Fassade durch Niederschläge gegeben. Dieses Testmedium (Inokulum) wird dann gleichmäßig auf die Prüflinge verteilt, und zwar so, dass die Oberfläche vollständig benetzt ist.

Die Versuchsbedingungen entsprechen Nordseitenbedingungen (PAR 20 µmol Photonen/m²s, Tagesgang 16 h hell bei 18 °C, 8 h dunkel, 8 °C; 95% r. F.). Die Inkubation läuft über 31 Tage. Während der Inkubation wird Tauwasseranfall simuliert, zur Nährstoffversorgung werden die Grünalgen auf den Prüflingen regelmäßig mit verdünntem Modified Bold's Basalmedium (MBBM, Mineralmedium) beregnet.

Es wird hierbei auf sog. Warmlicht (Lumilux, Biolux) zurückgegriffen mit einem hohen Anteil im Grün-und IR-Bereich, da hohe UV- und Blauanteile für das Algenwachstum schädlich sind. UV-Licht kann zugeschaltet werden, z.B. bei der Prüfung der Photokatalyse.

Es wird ermittelt, ob es sich bei den Verfärbungen um aktive Befälle oder inaktives Inokulum (Impfung) handelt. Hierbei werden die Zellzahlen auf den Prüfkörperoberflächen bestimmt, indem die Eigenfluoreszenz des Chlorophylls bei Grün- und UV-Anregung ausgenutzt wird. Dazu werden die Mittelwerte aus min. 30 Einzelmessungen je Probe berechnet und auf 1 cm² extrapoliert.

Gezählt werden jeweils die Zellen, welche eindeutig aufgrund ihrer roten Fluoreszenzantwort als vital einzustufen sind. Nicht vitale Algen werden dem Inokulum zugeordnet, d.h. sie werden überimpft, können aber keine Wachstumsprozesse aufrechterhalten.

Zielvorgabe ist eine Zellzahl von <200.000 Algen pro cm², bevorzugt < 100.000 Algen pro cm², besonders bevorzugt <50.000 Algen pro cm².

Langzeituntersuchungen haben gezeigt, dass Beschichtungen, welche im Test an frischen und vorgealterten Prüfmustern mit weniger als 200.000 Zellen pro cm² befallen waren, auch langfristig und im Freiland keinen signifikanten Befall aufweisen.

Mit dem menschlichen Auge erkennbar wird ein Algenbefall in der Regel ab ca. 250.000 Algen / cm².

### Rezepturen :

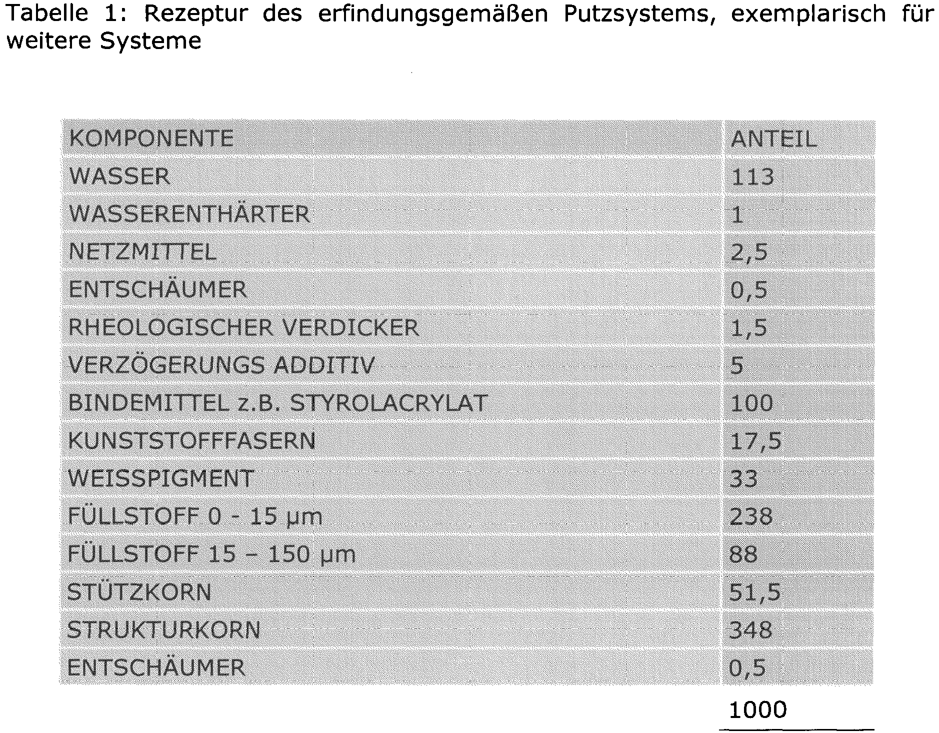

Die Zugabe der oben genannten aktiven Substanzen erfolgt im Anschluss. Nach der Applikation werden die Proben eine Woche in einem Klimaraum bei 23°C und einer relativen Luftfeuchte von 50% konditioniert

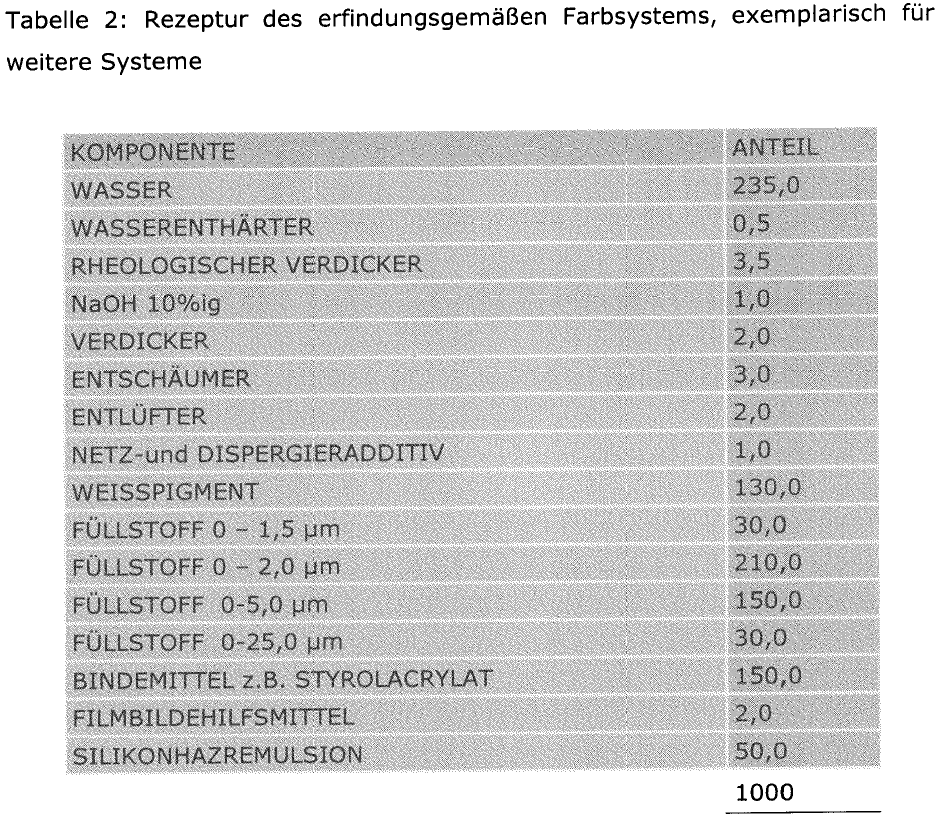

Die Zugabe der oben genannten aktiven Substanzen erfolgt im Anschluss. Nach der Applikation werden die Proben eine Woche in einem Klimaraum bei 23°C und einer relativen Luftfeuchte von 50% konditioniert

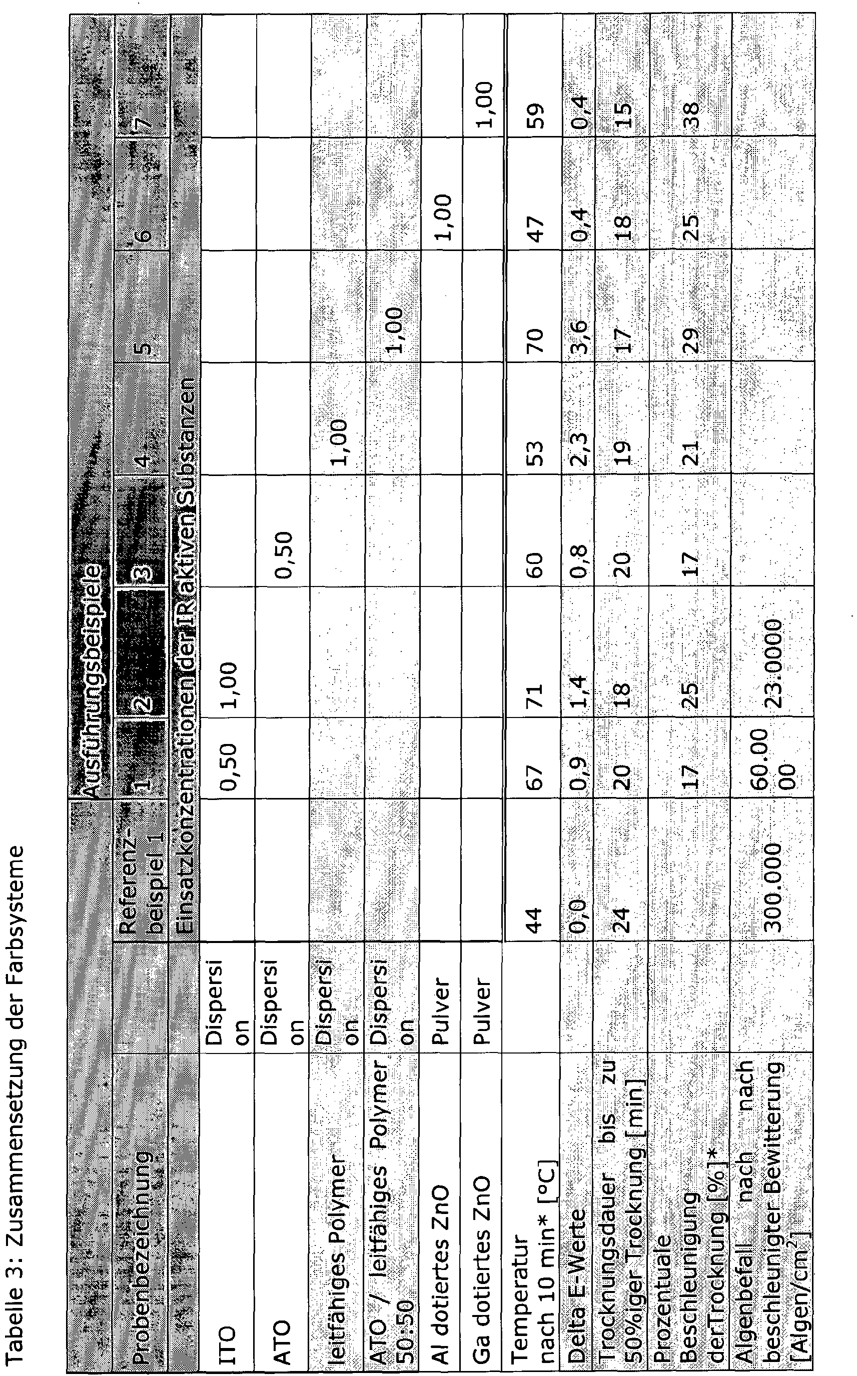

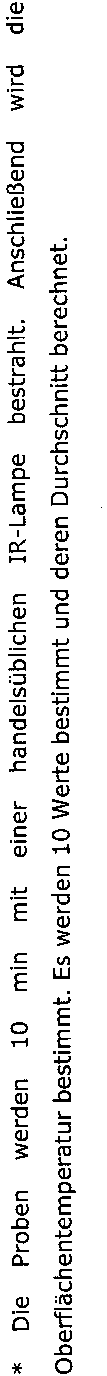

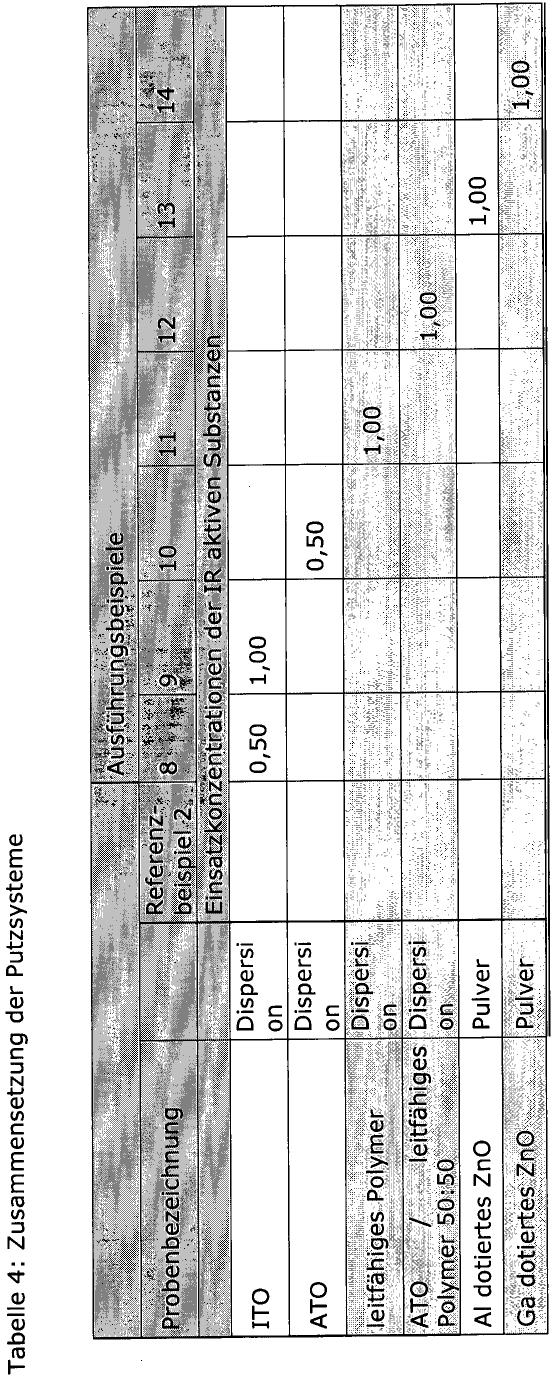

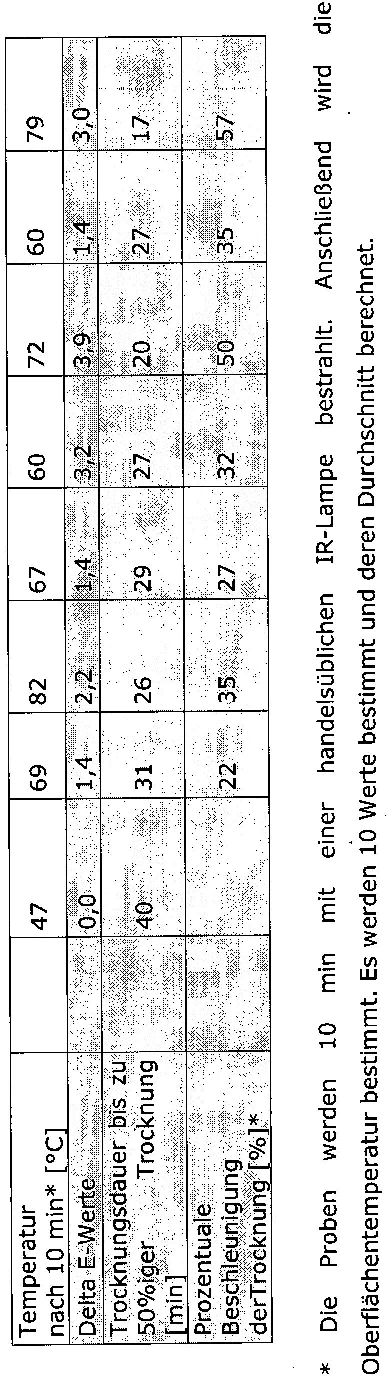

### Ausführungsbeispiele

### Referenzbeispiel 1:

Analog dem Rezept aus Tabelle 1, wurde eine Farbe hergestellt. Es wurde keine IR-Strahlung absorbierende Substanz hinzugefügt.

Es wurde gefunden, dass Referenzbeispiel 1 eine langsamere Trocknungsgeschwindigkeit zeigte als die erfindungsgemäßen modifizierten Farbsysteme.

Des Weiteren wurde gefunden, dass die gemessene Oberflächentemperatur nur bei 44 °C lag.

Das Referenzbeispiel 1 diente als Bezugswert zur Bestimmung des Farbabstands.

Bei den Untersuchungen des Algenbefalls, nach der beschleunigten Bewitterung mit Impfung, wurde gefunden, dass das Referenzbeispiel 1 Algenbewuchs aufwies. Es wurden 300.000 vitale Algen pro cm² nachgewiesen.

### Ausführungsbeispiel 1:

Analog dem Rezept aus Tabelle 1 wurde eine Farbe hergestellt. Wie oben beschrieben wurde 0,5 Gew.-% ITO hinzugefügt.
Es wurde gefunden, dass das Ausführungsbeispiel 1 eine um 17 % schnellere Trocknungsgeschwindigkeit zeigt als das Referenzbeispiel 1.
Des Weiteren wurde gefunden, dass die gemessene Oberflächentemperatur bei 67 °C liegt.

Das Referenzbeispiel 1 diente als Referenz zur Bestimmung des Farbabstands. Der delta E-Wert des Ausführungsbeispiel 1 lag bei 0,9.

Bei den Untersuchungen des Algenbefalls nach, der beschleunigten Bewitterung mit Impfung, wurde gefunden, dass das Ausführungsbeispiel 1 einen verringerten Algenbewuchs aufwies. Es wurden 60.000 vitale Algen pro cm² nachgewiesen.

### Ausführungsbeispiel 2:

Analog dem Rezept aus Tabelle 1 wurde eine Farbe hergestellt. Wie oben beschrieben wurde 1,0 Gew.-% ITO hinzugefügt.

Es wurde gefunden, dass das Ausführungsbeispiel 2 eine um 25 % schnellere Trocknungsgeschwindigkeit zeigte als das Referenzbeispiel 1.
Des Weiteren wurde gefunden, dass die gemessene Oberflächentemperatur bei 71 °C lag.

Das Referenzbeispiel 1 diente als Referenz zur Bestimmung des Farbabstands. Der delta E-Wert des Ausführungsbeispiels 2 lag bei 1,4.
Bei den Untersuchungen des Algenbefalls nach, der beschleunigten Bewitterung mit Impfung,wurde gefunden, dass das Ausführungsbeispiel 2 mit höherem ITO Anteil einen verringerten Algenbewuchs als das Ausführungsbeispiel 1 aufwies. Es wurden 23.000vitale Algen pro cm² nachgewiesen.

### Ausführungsbeispiel 3:

Analog dem Rezept aus Tabelle 1 wurde eine Farbe hergestellt. Wie oben beschrieben wurde 0,5 Gew.-% ATO hinzugefügt.

Es wurde gefunden, dass das Ausführungsbeispiel 3 eine 17 % schnellere Trocknungsgeschwindigkeit zeigte als das Referenzbeispiel 1.

Des Weiteren wurde gefunden, dass die gemessene Oberflächentemperatur bei 56 °C lag.

Das Referenzbeispiel 1 diente als Referenz zur Bestimmung des Farbabstands.

Der delta E-Wert des Ausführungsbeispiels 3 lag bei 0,8.

### Ausführungsbeispiel 4:

Analog dem Rezept aus Tabelle 1 wurde eine Farbe hergestellt. Wie oben beschrieben wurde 1,0 Gew.- % Poly(3,4-ethylendioxythiophen) / Poly(styrolsulfonat) hinzugefügt.
Es wurde gefunden, dass das Ausführungsbeispiel 4 eine 21 % schnellere Trocknungsgeschwindigkeit zeigte als das Referenzbeispiel 1.

Des Weiteren wurde gefunden, dass die gemessene Oberflächentemperatur bei 53 °C lag.

Das Referenzbeispiel 1 diente als Referenz zur Bestimmung des Farbabstands. Der delta E-Wert des Ausführungsbeispiels 4 lag bei 2,3.

### Ausführungsbeispiel 5:

Analog dem Rezept aus Tabelle 1 wurde eine Farbe hergestellt. Wie oben beschrieben wurde 1,0 Gew.-% eine Mischung im Verhältnis 50:50 aus ATO und Poly(3,4-ethylendioxythiophen) / Poly(styrolsulfonat) hinzugefügt.
Es wurde gefunden, dass das Ausführungsbeispiel 5 eine 29 % schnellere Trocknungsgeschwindigkeit zeigte als zeigt als das Referenzbeispiel 1.
Des Weiteren wurde gefunden, dass die gemessene Oberflächentemperatur bei 70 °C lag.

Das Referenzbeispiel 1 diente als Referenz zur Bestimmung des Farbabstands.

Der delta E-Wert des Ausführungsbeispiels 5 lag bei 3,6.

### Ausführungsbeispiel 6:

Analog dem Rezept aus Tabelle 1, wurde eine Farbe hergestellt. Wie oben beschrieben wurde 1,0 Gew.-% ZnO (Al dotiert) hinzugefügt.
Es wurde gefunden, dass das Ausführungsbeispiel 6 eine 25% schnellere Trocknungsgeschwindigkeit zeigte als das Referenzbeispiel 1.
Des Weiteren wurde gefunden, dass die gemessene Oberflächentemperatur bei 47 °C lag.

Das Referenzbeispiel 1 diente als Referenz zur Bestimmung des Farbabstands.

Der delta E-Wert des Ausführungsbeispiels 6 lag bei 0,4.

### Ausführungsbeispiel 7:

Analog dem Rezept aus Tabelle 1 wurde eine Farbe hergestellt. Wie oben beschrieben wurde 1,0 Gew.- % ZnO (G dotiert) hinzugefügt.

Es wurde gefunden, dass das Ausführungsbeispiel 7 eine 38% schnellere Trocknungsgeschwindigkeit zeigte als das Referenzbeispiel 1.
Des Weiteren wurde gefunden, dass die gemessene Oberflächentemperatur bei 59 °C lag.

Das Referenzbeispiel 1 diente als Referenz zur Bestimmung des Farbabstands.

Der delta E-Wert des Ausführungsbeispiels 7 lag bei 0,4.

### Referenzbeispiel 2:

Analog dem Rezept aus Tabelle 2 wurde ein Putz hergestellt. Es wurde keine IR-Strahlung absorbierende Substanz hinzugefügt.

Es wurde gefunden, dass das Referenzbeispiel 2 eine langsamere Verdunstungsgeschwindigkeit zeigte als die erfindungsgemäßen modifizierten Putzsysteme.

Des Weiteren wurde gefunden, dass die gemessene Oberflächentemperatur nur bei 47 °C lag.

Das Referenzbeispiel 2 diente als Referenz zur Bestimmung des Farbabstands.

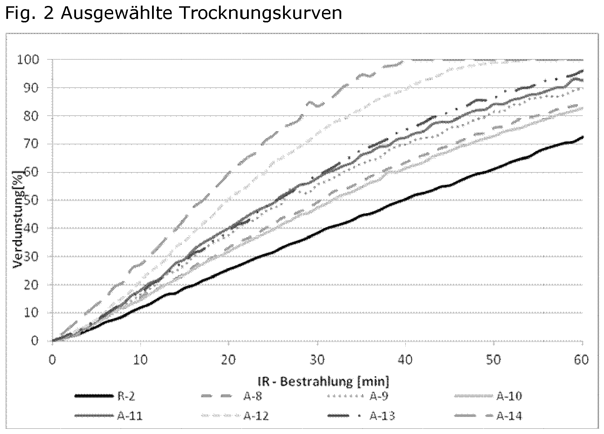

In Fig. 2 die Verdunstungsgeschwindigkeit der Beispiele wiedergegeben.

### Ausführungsbeispiel 8:

Analog dem Rezept aus Tabelle 2 wurde ein Putz hergestellt. Wie oben beschrieben wurde 0,5 Gew.-% ITO hinzugefügt.

Es wurde gefunden, dass das Ausführungsbeispiel 8 eine 22% schnellere Trocknungsgeschwindigkeit zeigte als Referenzbeispiel 2.

Des Weiteren wurde gefunden, dass die gemessene Oberflächentemperatur bei 69 °C lag.

Das Referenzbeispiel 2 diente als Referenz zur Bestimmung des Farbabstands.

Der delta E-Wert des Ausführungsbeispiels 8 lag bei 1,4.

In Fig. 2 wird die Verdunstungsgeschwindigkeit des Beispiels wiedergegeben.

### Ausführungsbeispiel 9:

Analog dem Rezept aus Tabelle 2 wurde ein Putz hergestellt. Wie oben beschrieben wurde 1,0 Gew.-% ITO hinzugefügt.

Es wurde gefunden, dass das Ausführungsbeispiel 9 eine 35 % schnellere Trocknungsgeschwindigkeit zeigte als das Referenzbeispiel 2.

Des Weiteren wurde gefunden, dass die gemessene Oberflächentemperatur bei 82 °C lag.

Das Referenzbeispiel 2 diente als Referenz zur Bestimmung des Farbabstands.

Der delta E-Wert des Ausführungsbeispiels 9 liegt bei 2,2.

In Fig. 2 wird die Verdunstungsgeschwindigkeit des Beispiels wiedergegeben.

### Ausführungsbeispiel 10:

Analog dem Rezept aus Tabelle 2 wurde ein Putz hergestellt. Wie oben beschrieben wurde 0,5% Gew.- ATO hinzugefügt.

Es wurde gefunden, dass das Ausführungsbeispiel 10 eine 27 % schnellere Trocknungsgeschwindigkeit zeigte als das Referenzbeispiel 2.

Des Weiteren wurde gefunden, dass die gemessene Oberflächentemperatur bei 67 °C lag.

Das Referenzbeispiel 2 diente als Referenz zur Bestimmung des Farbabstands.

Der delta E-Wert des Ausführungsbeispiels 10 lag bei 1,4.

In Fig. 2 wird die Verdunstungsgeschwindigkeit des Beispiels wiedergegeben.

### Ausführungsbeispiel 11:

Analog dem Rezept aus Tabelle 2 wurde ein Putz hergestellt. Wie oben beschrieben wurde 1,0 Gew.-% eines Poly(3,4-ethylendioxythiophen) / Poly(styrolsulfonat) (leitfähiges Polymers) hinzugefügt.

Es wurde gefunden, dass das Ausführungsbeispiel 11 eine 32 % schnellere Trocknungsgeschwindigkeit zeigte als das Referenzbeispiel 2.
Des Weiteren wurde gefunden, dass die gemessene Oberflächentemperatur bei 60 °C lag.

Das Referenzbeispiel 2 diente als Referenz zur Bestimmung des Farbabstands.

Der delta E-Wert des Ausführungsbeispiels 11 lag bei 3,2.

In Fig. 2 wird die Verdunstungsgeschwindigkeit des Beispiels wiedergegeben.

### Ausführungsbeispiel 12:

Analog dem Rezept aus Tabelle 2 wurde ein Putz hergestellt. Wie oben beschrieben wurde 1,0 Gew.-% einer Mischung im Verhältnis 50:50 (Gew.-%) aus ATO und Poly(3,4-ethylendioxythiophen) / Poly(styrolsulfonat) hinzugefügt.

Es wurde gefunden, dass das Ausführungsbeispiel 12 eine 50 % schnellere Trocknungsgeschwindigkeit zeigte als das Referenzbeispiel 2.

Des Weiteren wurde gefunden, dass die gemessene Oberflächentemperatur nur bei 72°C lag.

Das Referenzbeispiel 2 diente als Referenz zur Bestimmung des Farbabstands.

Der delta E-Wert des Ausführungsbeispiels 12 lag bei 3,9.

In Fig. 2 wird die Verdunstungsgeschwindigkeit des Beispiels wiedergegeben.

### Ausführungsbeispiel 13:

Analog dem Rezept aus Tabelle 2 wurde ein Putz hergestellt. Wie oben beschrieben wurde 1,0 Gew.-% ZnO (Al dotiert) hinzugefügt.

Es wurde gefunden, dass das Ausführungsbeispiel 13 eine 35 % schnellere Trocknungsgeschwindigkeit zeigte als das Referenzbeispiel 2.

Des Weiteren wurde gefunden, dass die gemessene Oberflächentemperatur nach Untersuchungsmethode 2 nur bei 60 °C lag.

Das Referenzbeispiel 2 diente als Referenz zur Bestimmung des Farbabstands.

Der delta E-Wert des Ausführungsbeispiels 13 lag bei 1,4.

In Fig. 2 wird die Verdunstungsgeschwindigkeit des Beispiels wiedergegeben.

### Ausführungsbeispiel 14:

Analog dem Rezept aus Tabelle 2 wurde ein Putz hergestellt. Wie oben beschrieben wurde 1,0 Gew.-% ZnO (Ga dotiert) hinzugefügt.

Es wurde gefunden, dass das Ausführungsbeispiel 14 eine 57 % schnellere Trocknungsgeschwindigkeit zeigte als das Referenzbeispiel 2.

Des Weiteren wurde gefunden, dass die gemessene Oberflächentemperatur nach Untersuchungsmethode 2 nur bei 79 °C lag.

Das Referenzbeispiel 2 diente als Referenz zur Bestimmung des Farbabstands.

Der delta E-Wert des Ausführungsbeispiels 14 lag bei 3,0.

In Fig. 2 wird die Verdunstungsgeschwindigkeit des Beispiels wiedergegeben.

## Patentansprüche

1. Schnell abtrocknende Beschichtungen von mineralischen Oberflächen von Farb- und Putzsystemen, **dadurch gekennzeichnet, dass** sie Halbleiter, ausgewählt aus einer der Gruppen:
**a),**
**a) und b),**
**a) und c),**
**a) und b) und c)**
**b) und c) und**
**c),**
**wobei**
**a)** für - A^{III}B^{V}-Halbleiter umfassende Verbindungen des binären Typs, wobei A für Gallium, Indium, Thallium, Germanium, Zinn, Blei und B für Stickstoff, Phosphor, Arsen, Antimon und Bismut in beliebigen stöchiometrischen Verhältnissen steht,
b) für - elementare Halbleiter, insbesondere Modifikationen des Zinns, Indiums, Kohlenstoffs, Siliziums und Germaniums und
c) für - leitfähige organische Polymere, insbesondere Polypyrrol, Polyanilin, Polyparaphenylen, Polythiophen, Poly(4,4-dioctylcyclopentadithiophene), Poly(3,4-ethylendioxythiophen) oder Poly(3,4-ethylendioxythiophen) / Poly(styrolsulfonat) steht,
enthalten.

2. Beschichtungen nach Anspruch 1, **dadurch gekennzeichnet, dass** sie einen Halbleiter aus der Gruppe der transparenten leitfähigen Oxiden des Typen AₙBₘOₓ, wobei A Fluor, Indium, Magnesium, Aluminium, Chrom, Zink oder Antimon und B-Zink, Titan oder Zinn, und n eine Zahl zwischen 0 und 1 und m=1-n ist, wobei x die erforderliche Zahl zur stöchiometrischen Absättigung der Metalle einnimmt, umfassen.

3. Beschichtungen nach Anspruch 1 oder 2, **dadurch gekennzeichnet, dass** sie weitere Bestandteile der Farb- und Putzsysteme, insbesondere Verdicker (Polyurethane, Acrylate oder Celluloseether), Netz- und Dispergiermittel, rheologische Additive, Entschäumer und Bindemittel (Styrolacrylat, Reinacrylat oder Polyvinylacrylate, Naturharz oder Wasserglas) und gegebenenfalls anorganische Bindemittel enthalten.

4. Beschichtungen nach einem der Ansprüche 1 bis 3, **dadurch gekennzeichnet, dass** die Halbleiter und weiteren Bestandteile in organischen Lösungsmitteln, Wasser oder deren Mischungen der vorgenannten Lösungsmittel gelöst, dispergiert, kolloidal oder fein verteilt vorliegen.

5. Mineralische Oberflächen, **dadurch gekennzeichnet, dass** sie eine Beschichtung mit einer Putzzusammensetzung gemäß einem der Ansprüche 1 bis 4 umfasst.

6. Verfahren zur Beschichtung von mineralischen Oberflächen mit einer Beschichtung gemäß einem der Ansprüche 1 bis 4 durch Bürsten, Streichen, Sprayen, Spachteln, Aufziehen oder Rollen.

## Claims

1. Quick-drying coatings on mineral surfaces of paint and plaster systems, **characterized by** containing semiconductors selected from one of groups:
a),
a) and b),
a) and c),
a) and b) and c),
b) and c), and
c)
wherein
a) represents binary type compounds comprising A^{III}B^{V} semiconductors, wherein A represents gallium, indium, thallium, germanium, tin, lead, and B represents nitrogen, phosphorus, arsenic, antimony and bismuth in any stoichiometric ratios,
b) represents elemental semiconductors, especially allotropes of tin, indium, carbon, silicon and germanium, and
c) represents conductive organic polymers, especially polypyrrole, polyaniline, polyparaphenylene, polythiophene, poly(4,4-dioctylcyclopentadithiophene), poly(3,4-ethylenedioxythiophene), or poly(3,4-ethylenedioxythiophene)/poly(styrene sulfonate).

2. Coatings according to claim 1, **characterized by** comprising a semiconductor from the group of transparent conductive oxides of the type AₙBₘOₓ, wherein A is fluorine, indium, magnesium, aluminum, chromium, zinc or antimony, and B is zinc, titanium or tin, and n is a number of from 0 to 1, and m = 1-n, wherein x represents the number required for stoichiometric saturation of the metals.

3. Coatings according to claim 1 or 2, **characterized by** containing further components of the paint and plaster systems, especially thickeners (polyurethanes, acrylates or cellulose ethers), wetting and dispersing agents, rheological additives, defoamers and binders (styrene acrylate, pure acrylate or polyvinyl acrylates, natural resin, or water glass), and optionally inorganic binders.

4. Coatings according to any of claims 1 to 3, **characterized in that** said semiconductors and further components are dissolved, dispersed, or in a colloidal or finely divided state, in organic solvents, water or mixtures of the above solvents.

5. Mineral surfaces, **characterized by** comprising a coating of a plaster composition according to any of claims 1 to 4.

6. A process for coating mineral surfaces with a coating according to any of claims 1 to 4 by brushing, painting, spraying, filling, spreading or rolling.

## Revendications

1. Revêtements à séchage rapide sur des surfaces minérales de systèmes de peinture et d'enduit, **caractérisés en ce qu'**ils contiennent des semi-conducteurs choisis dans un des groupes suivants :
a),
a) et b),
a) et c),
a) et b) et c),
b) et c), et
c)
où
a) représente des composés de type binaire comprenant des semi-conducteurs A^{III}B^{V}, dans lequel A représente gallium, indium, thallium, germanium, étain, plomb, et B représente azote, phosphore, arsenic, antimoine et bismuth en des rapports stoechiométriques quelconques,
b) représente des semi-conducteurs élémentaires, notamment des formes allotropiques de l'étain, de l'indium, du carbone, du silicium, et du germanium, et
c) représente des polymères organiques conducteurs, notamment le polypyrrole, la polyaniline, le polyparaphénylène, le polythiophène, le poly(4,4-dioctylcyclopentadithiophène), le poly(3,4-éthylènedioxythiophène) ou le poly(3,4-éthylènedioxythiophène)/acide polystyrène sulfonique.

2. Revêtements selon la revendication 1, **caractérisés en ce qu'**ils comprennent un semi-conducteur choisi dans le groupe des oxydes conducteurs transparents du type AₙBₘOₓ, où A est fluore, indium, magnésium, aluminium, chrome, zinc ou antimoine, et B est zinc, titane ou étain, et n est un nombre compris entre 0 et 1, et m = 1-n, dans lesquels x représente le nombre nécessaire pour la saturation stoechiométrique des métaux.

3. Revêtements selon la revendication 1 ou 2, **caractérisés en ce qu'**ils contiennent des composants additionnels des systèmes de peinture et d'enduit, notamment des agents épaississants (polyuréthanes, acrylates ou cellulose-éthers), des agents mouillants et dispersants, des additifs rhéologiques, des antimousses et des agents liants (acrylate de styrène, acrylate pure, ou polyacrylate der vinyle, résine naturelle ou verre soluble), et éventuellement des liants inorganiques.

4. Revêtements selon l'une quelconque des revendications 1 à 3, **caractérisés en ce que** les semi-conducteurs et composants additionnels sont dissouts, dispersés ou présents dans un état colloïdal ou finement divisé dans des solvants organiques, de l'eau ou des mélanges des solvants susmentionnés.

5. Surfaces minérales, **caractérisées en ce qu'**elles comprennent un revêtement avec une composition d'enduit selon l'une quelconque des revendications 1 à 4.

6. Procédé de revêtement de surfaces minérales avec un revêtement selon l'une quelconque des revendications 1 à 4 par application à la brosse, au pinceau, au pulvérisateur, à la spatule, à la truelle ou au rouleau.
